# EUROPEAN PATENT APPLICATION

(11) **EP 1 258 794 A1**
(43) Date of publication of application: **20.11.2002**
(21) Application number: 02253194.1
(22) Date of filing: 08.05.2002
(51) Int. Cl.: G05G 1/14

(54) **Adjustment device for automotive clutch pedal**

(30) Priority: 08.05.2001 JP 2001137552
(71) Applicant: Gotoh, Kazuo, Tokyo (JP)
(72) Inventor: Gotoh, Kazuo, Tokyo (JP)
(74) Representative: Greenwood, John David

(57) **Abstract**

There will be provided an adjustment device for an automotive clutch pedal capable of easily getting a grasp on the partial clutch engagement position by effecting economy in the clutch operation in simple equipment.

The adjustment device for an automotive clutch pedal has an adjusting tool 4. The adjusting tool 4 is provided on a pedal arm 1 of the automotive clutch pedal or on the vehicle body 2 side. The adjusting tool 4 regulates the final pedal step-in position so as to adjust in a direction to shorten a pedal stroke caused by the pedal arm 1.

## Description

### BACKGROUND OF THE INVENTION AND RELATED ART STATEMENT

The present invention relates to an adjustment device for an automotive clutch pedal.

Normally, an automotive clutch pedal adopted in a heavy duty vehicle, a vehicle for competition and the like is constructed such that a pedal arm thereof is pivotally mounted on the vehicle body side and a push rod of the clutch is operated by stepping in the pedal. This sort of automotive clutch pedal is provided with a stopper for regulating a normal position on the vehicle body side in order to regulate its maximum step-in position. Thus, generally, this maximum step-in position has been set so as to be able to step in excess of a necessary stroke for a clutch operation in order to adjust a clutch engagement and disengagement position for standard automotive maintenance.

In the above-described conventional structure, however, a stroke from a partial clutch engagement step-in position to a maximum step-in position has been set large. For this reason, it is difficult to get a grasp on the partial clutch engagement position, and moreover, a necessary stroke for an actual clutch operation has not been position-regulated. Therefore, since the driver depends upon his sense of operation concerning the partial clutch engagement position, there is no reliability in the operation, but the driver essentially steps deep up to the maximum step-in position (position whereat the clutch pedal comes to a halt), and exhausts his considerable nerves and labors to operate the clutch.

The present invention has been achieved in views of the above-described state of affairs, and is aimed to provide an adjustment device for an automotive clutch pedal capable of easily getting a grasp on the partial clutch engagement position by effecting economy in the clutch operation in simple equipment.

### SUMMARY OF THE INVENTION

In order to achieve the above-described object, according to a first aspect of the present invention, there is provided an adjustment device for an automotive clutch pedal, equipped with an adjusting tool, which is provided on a pedal arm of an automotive clutch pedal or on the vehicle body side, and which regulates the final pedal step-in position so as to adjust in a direction to shorten a pedal stroke caused by the pedal arm.

According to a second aspect of the present invention, there is provided the adjustment device for an automotive clutch pedal specified in first aspect, wherein
the adjusting tool is equipped with:
an adjusting rod, the tip end of which extends on the vehicle body side; and
a fixture which is fixed to the pedal arm and which supports the adjusting rod so as to be able to freely adjust the length thereof in such a manner that on stepping in the pedal, the tip end of the adjusting rod abuts upon the vehicle body side to thereby regulate the final pedal step-in position.

According to a third aspect of the present invention, there is provided the adjustment device for an automotive clutch pedal specified in second aspect, wherein
the fixture is equipped with:
a supporting plate for supporting and fixing the adjusting rod so as to be able to freely adjust the length thereof;
a pair of mounting pieces to which the supporting plate concerned is mounted, and which sandwiches the front and rear portions of the pedal arm therebetween; and
fixing members which are located on the left and right sides of the pedal arm and fix so as to sandwich the pedal arm between the mounting pieces, and wherein
the adjusting rod is fixed so as to be able to vertically adjust a fixing position of the adjusting rod to the pedal arm.

According to a fourth aspect of the present invention, there is provided the adjustment device for an automotive clutch pedal specified in third aspect, wherein
the supporting plate is mounted to the mounting piece so as to be able to freely adjust the position of the adjusting rod.

According to a fifth aspect of the present invention, there is provided the adjustment device for an automotive clutch pedal specified in first aspect, wherein
the adjusting tool is equipped with:
an adjusting rod, the tip end of which extends on the vehicle body side; and
a supporting fixed portion which supports and fixes the adjusting rod so as to be able to freely adjust the length thereof, and which is fixed to the pedal arm in such a manner that on stepping in the pedal, the tip end of the adjusting rod abuts upon the vehicle body side to thereby regulate the final pedal step-in position.

According to a sixth aspect of the present invention, there is provided the adjustment device for an automotive clutch pedal specified in first aspect, wherein
the adjusting tool is equipped with:
an adjusting rod, the tip end of which opposes to the pedal arm; and
a supporting fixed portion which is fixed on the vehicle body side, and which supports the adjusting rod so as to be able to freely adjust the length thereof in such a manner that on stepping in the pedal, the tip end of the adjusting rod abuts upon the pedal arm to thereby regulate the final pedal step-in position.

Such structure is adopted, whereby in the adjustment device for an automotive clutch pedal according to the present invention, the clutch operation can be reliably performed by stepping in the pedal short up to a position regulated by the adjusting tool 4(4'), and the clutch operation can be easily realized without any waste step-in. Also, owing to a small stroke difference from the clutch engagement and disengagement position, there are advantages such as easiness to get a grasp on the partial clutch engagement position.

### BRIEF DESCRIPTION OF THE DRAWINGS

Fig. 1 is a perspective view for the whole showing a first embodiment of the present invention;
Fig. 2 is an exploded perspective view for a principal part showing the first embodiment of the present invention;
Fig. 3 is a side view illustrating a pedal stepped-in state in the first embodiment of the present invention;
Fig. 4 is a side view showing a second embodiment of the present invention; and
Fig. 5 is a side view showing a third embodiment of the present invention.

### DETAILED DESCRIPTION OF THE PREFERRED EMBODIMENTS

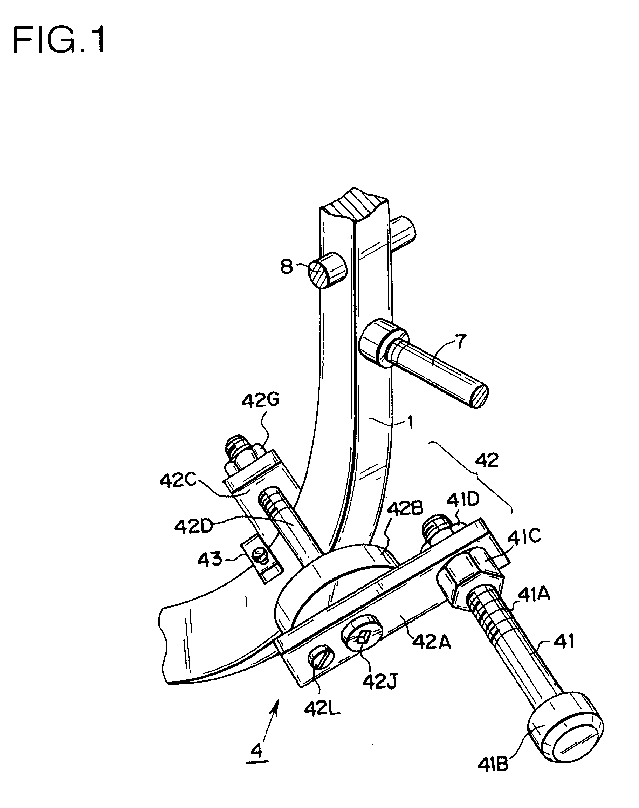

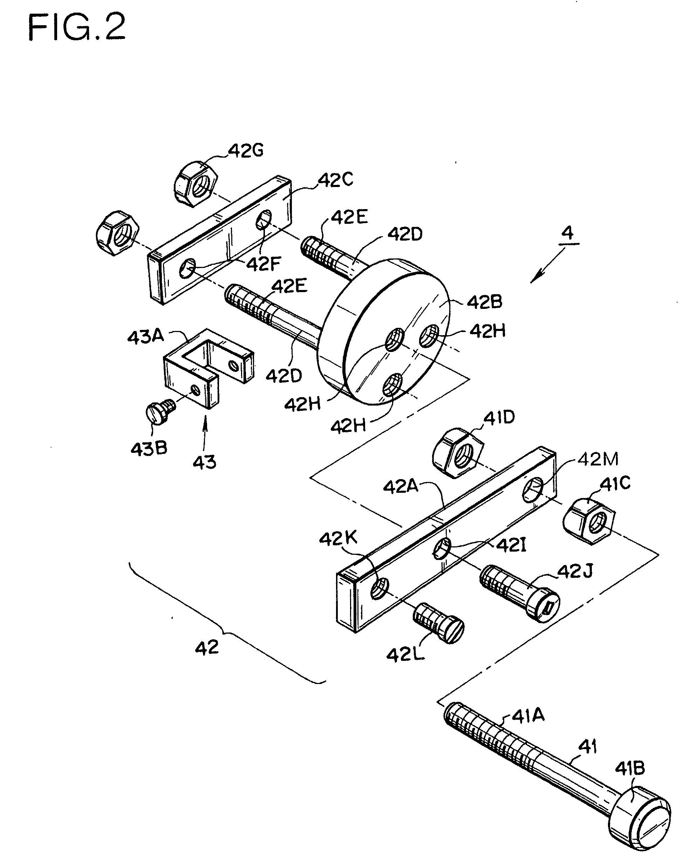

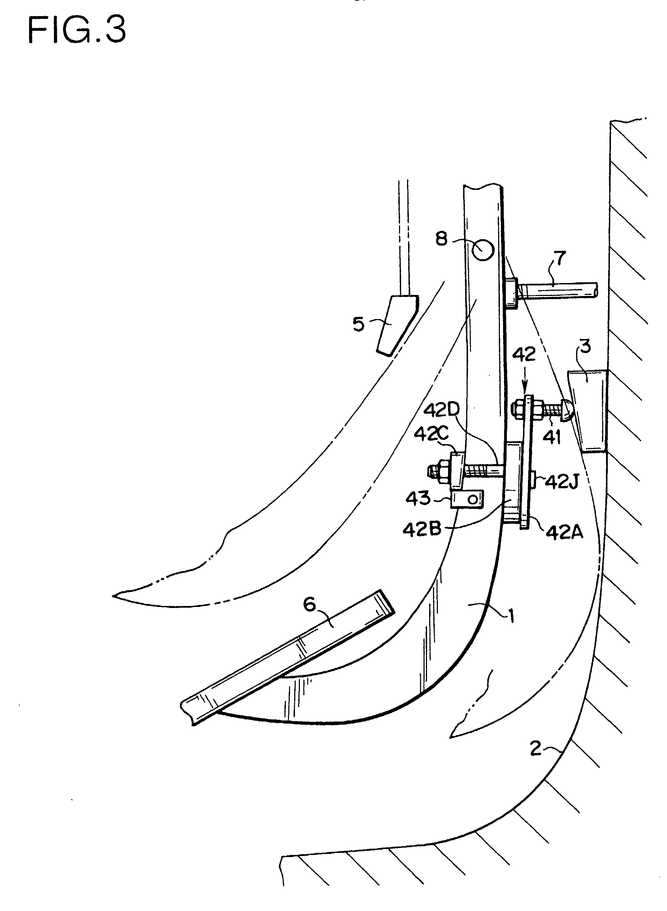

Hereinafter, with reference to Figs. 1 to 3, the description will be made of a first embodiment of the present invention specifically. An adjustment device according to the first embodiment adjusts in a direction to shorten a pedal stroke caused by a pedal arm 1 of an automotive clutch pedal. For this reason, there is, on the pedal arm 1 or the vehicle body 2 side, provided an adjusting tool 4 for regulating the final pedal step-in position. Also, generally, the automobile is provided with a stopper 3 for regulating a normal position as shown in Fig. 3 on the vehicle body 2 side in order to regulate an amount of rotation of the pedal arm 1.

In the present embodiment, the adjusting tool 4 has an adjusting rod 41, the tip end of which extends on the vehicle body 2 side so as to be able to freely adjust the length thereof. Also, there is provided a fixture 42 through which the adjusting tool 4 is detachably fixed to the pedal arm 1.

The adjusting rod 41 is a bolt-shaped rod, the body of which is formed with a threaded portion 41A. Also, at the tip end thereof, there is formed a head 41B which abuts upon the stopper 3 located on the vehicle body 2 side. Further, its proximal end is inserted through an insertion hole 42M, and check nuts 41C, 41D are pivotally thread-mounted.

The fixture 42 is constructed such that the adjusting tool 4 is detachably fixed by sandwiching the pedal arm 1 therebetween. Also, in the lower portion of the fixture 42, there is provided a stopper member 43 which is detachably sandwiched and fixed to the pedal arm 1 in order to prevent the adjusting tool 4 from slipping down. The stopper member 43 is constructed of a U-character-shaped mounting member 43A for sandwiching the pedal arm 1 between right and left and a fixing screw 43B to be threadedly engaged therewith. In a state in which the pedal arm 1 is sandwiched in the mounting member 43A, the tip end of the fixing screw 43B abuts upon the side surface of the pedal arm 1, whereby the pedal arm 1 is fixed by the stopper member 43.

The fixture 42 has a supporting plate 42A, the mounting pieces 42B, 42C, and fixing members 42D. The supporting plate 42A is rectangular-shaped, and supports and fixes the proximal end of the adjusting rod 41. The mounting pieces 42B, 42C are constructed such that the pedal arm 1 is sandwiched between in front and in rear in the back of the supporting plate 42A. One mounting piece 42B is disk-shaped while the other mounting piece 42C is rectangular-shaped. The fixing members 42D are located on the right and left sides of the pedal arm 1 and used in a pair, and fix one and the other mounting pieces 42B, 42C so as to sandwich them.

Each of the fixing members 42D is constructed like a rod which extends in parallel to each other from the one mounting piece 42B. Each fixing member 42D is formed with a thread 42E at least on the tip end side. The tip end of each fixing member 42D penetrates a mounting hole 42F formed in the other mounting piece 42C. The tip end of each fixing member 42D is threadedly engaged with a nut 42G on the opposite side on which the mounting piece 42C has been penetrated. Thus, between one and the other mounting pieces 42B, 42C, the pedal arm 1 is sandwiched and fixed.

The supporting plate 42A has a through hole 42I. Also, the one mounting piece 42B has a plurality (three in the present embodiment) of mounting threaded holes 42H. In the through hole 42I formed in the supporting plate 42A, a fixing screw 42J is inserted through. The fixing screw 42J inserted through is threadedly engaged with any mounting threaded hole 42H selected, whereby it is detachably mounted. In this respect, the plurality of mounting threaded holes 42H are appropriately selected, whereby the position of the adjusting rod 41 becomes adjustable in such a manner that the head 41B of the adjusting rod 41 abuts upon the stopper 3. Also, even though the supporting plate 42A is caused to be rotated with the fixing screw 42J as the center, the position of the adjusting rod 41 can be made adjustable.

Also, the supporting plate 42A is separately formed with a setscrew hole 42K. With this setscrew hole 42K, a setscrew 42L is threadedly engaged, and its tip end is pressed onto the front surface of the mounting piece 42B to firmly hold the fixed position of the supporting plate: 42A to the mounting piece 42B.

In this respect, in the figure, a reference numeral 5 designates a stopper provided on the vehicle body side in order to regulate a first movement position of the clutch pedal 6. Also, a reference numeral 7 designates a push rod to be connected to the clutch mechanism. At the proximal end of this push rod 7, there is formed a screw which makes fine adjustments of the length of the push rod 7. Also, a reference numeral 8 designates a pivot of the clutch pedal 6. The push rod 7 is provided below the pivot 8, and the adjusting tool 4 is provided further below the push rod 7. Thus, the adjustment stroke due to the adjusting tool 4 can be taken sufficiently long.

In such structure, on stepping in the pedal, the tip end (head 41B) of the adjusting rod 41 abuts upon the vehicle body 2 side (stopper 3) to regulate the final pedal step-in position.

Since the clutch pedal can be thus stepped in short up to a position regulated by the adjusting tool 4, the clutch operation can be made easy without any waste step-in. Also, owing to the small stroke difference from the clutch engagement and disengagement position, it is easy to get a grasp on the partial clutch engagement position. As a result, for example, the time elapsed between the partial clutch engagement operation and the clutch engagement operation can be shortened, the wearing out of the clutch plate can be reduced, and yet signal start, standing start, slope start and the like can be performed easily. This is advantageous in automobile traveling during traffic congestion.

Also, since the clutch step in position is regulated; it is possible to reliably perform the clutch operation by stepping in up to the regulated position. Therefore, even a beginner easily conforms to the clutch operation. Particularly, when this adjustment device is mounted onto a vehicle for competition, there is the merit that the clutch operation when the gear shift is frequently changed can be achieved quickly and smoothly.

Further, owing to the small stroke difference from the clutch engagement and disengagement position, when there occurs leakage or consumption of control oil in, for example, the clutch hydraulic system, the clutch engagement and disengagement position approaches the clutch step-in position regulated to deviate, and therefore, the above-described leakage or consumption can be detected early.

Also, since it is constructed such that it is fixed so as to sandwich the pedal arm 1, the adjusting tool 4 can have general-purpose properties that it can be mounted onto any vehicle type. In this respect, a region upon which the head 41B of the adjusting rod 41 abuts is not limited to the stopper 3 for regulating a normal position, but can be on the vehicle body 2 side. Also, a new stopper 3 may be provided to align it with a position upon which the head 41B of the adjusting rod 41 abuts.

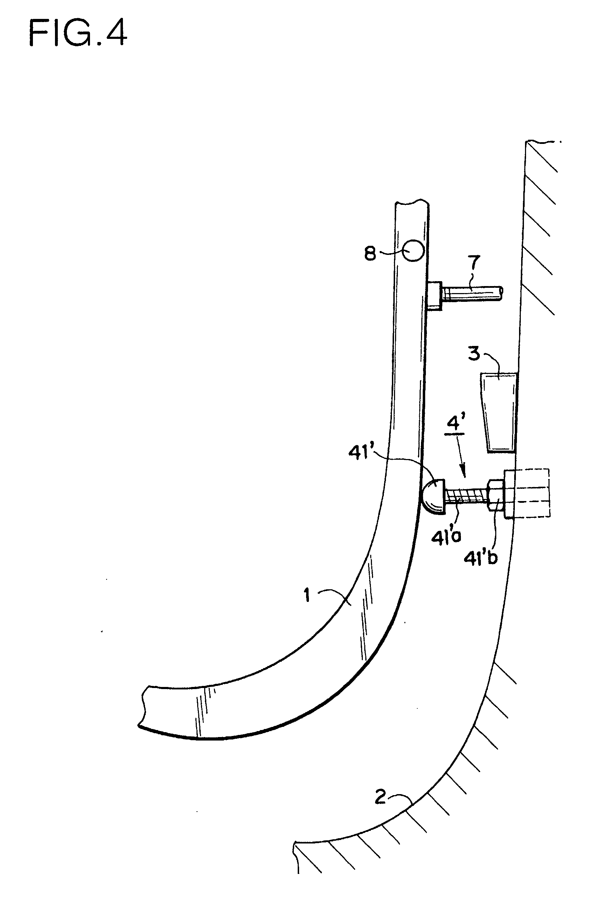

Fig. 4 shows a second embodiment according to the present invention. In this case, the adjusting tool 4' has an adjusting rod 41', the tip end of which opposes to the pedal arm 1. The adjusting rod 41' has a threaded portion 41'a. Also, the adjusting tool 4' threadedly engages with the threaded portion 41'a of the adjusting rod 41', and has a fixing nut 41'b as a supporting fixed portion to be fixed on the vehicle body 2 side. These threaded portion 41'a of the adjusting rod 41' and a fixing nut 41'b constitute adjustment means which supports the adjusting rod 41' so as to be able to freely adjust the length thereof.

In this second embodiment, since there is provided an adjusting rod on the vehicle body side, it is possible to reduce a number of components, and to simplify the structure as a whole.

Also, on stepping in the pedal, the tip end of the adjusting rod 41' abuts upon the pedal arm 1 to regulate the final pedal step-in position. Since the clutch pedal can be thus stepped in short up to a position regulated by the adjusting tool 4', the clutch operation can be made easy without any waste step-in. Also, owing to the small stroke difference from the clutch engagement and disengagement position, it is easy to get a grasp on the partial clutch engagement position. As a result, for example, the time elapsed between the partial clutch engagement operation and the clutch engagement operation can be shortened, the wearing out of the clutch plate can be reduced, and yet signal start, standing start, slope start and the like can be performed easily. This is advantageous in automobile traveling during traffic congestion. As described above, the second embodiment can obtain the similar effect to the above-described first embodiment.

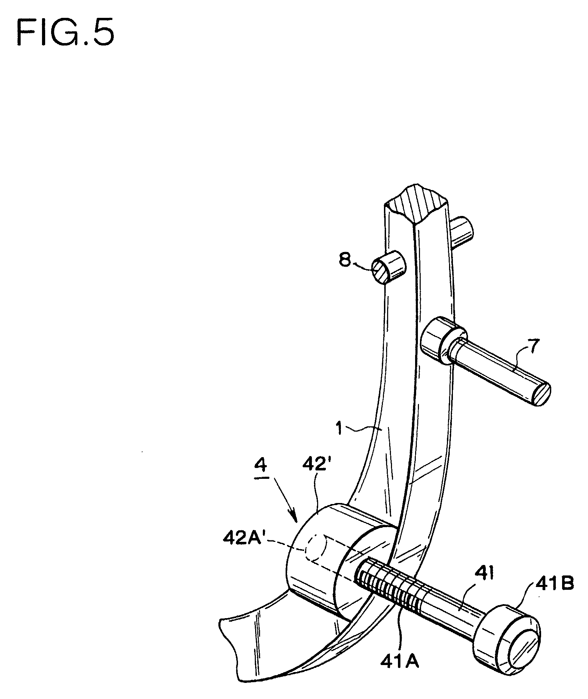

Also, Fig. 5 shows a third embodiment according to the present invention. In this case, as in the case of the first embodiment, the adjusting tool 4 has an adjusting rod 41, the tip end (head 41B) of which extends on the vehicle body 2 side. Also, the adjusting rod 41 is supported and fixed by a supporting fixed portion 42' fixed to the pedal arm 1 so as to be able to freely adjust the length thereof. The supporting fixed portion 42' is provided with a threaded hole 42A' which threadedly engages with a threaded portion 41A of the adjusting rod 41, whereby the adjusting rod 41 is made freely adjustable in length. Also, the supporting fixed portion 42' is mounted through a mounting hole (not shown) formed in the pedal arm 1. Also, the supporting fixed portion 42' may be mounted to the pedal arm 1 by weld sticking. Further, the supporting fixed portion 42' may be provided by being made integral as a part of the pedal arm 1.

In this third embodiment, on stepping in the pedal, the tip end (head 41B) of the adjusting rod 41 abuts upon the vehicle body 2 side (stopper 3) to regulate the final pedal step-in position. Since the clutch pedal can be thus stepped in short up to a position regulated by the adjusting tool 4, the clutch operation can be made easy without any waste step-in. Also, owing to the small stroke difference from the clutch engagement and disengagement position, it is easy to get a grasp on the partial clutch engagement position. As a result, for example, the time elapsed between the partial clutch engagement operation and the clutch engagement operation can be shortened, the wearing out of the clutch plate can be reduced, and yet signal start, standing start, slope start and the like can be performed easily. This is advantageous in automobile traveling during traffic congestion. As described above, the third embodiment can obtain the similar effect to the above-described first embodiment.

According to the present invention, on stepping in the pedal, the tip end of the adjusting rod provided in the pedal arm abuts upon the vehicle body side to regulate the final pedal step-in position. Or, the tip end of the adjusting rod provided on the vehicle body side abuts upon the pedal arm to regulate the final pedal step-in position. This final pedal step-in position can be adjusted by an adjusting rod capable of being freely adjusted in length.

Since the clutch pedal can be thus stepped in short up to a position regulated by the above-described structure, the clutch operation can be made easy without any waste step-in. Also, owing to the small stroke difference from the clutch engagement and disengagement position, it is easy to get a grasp on the partial clutch engagement position.

Also, if there is adopted the structure in which the adjusting rod is fixed by a fixture for fixing the pedal arm so as to sandwich, there will be no need for performing machining such as making a hole and welding for the pedal arm, but can have general-purpose properties that it can be mounted onto any vehicle type. Also, by means of a fixture for fixing so as to sandwich the pedal arm, the position for fixing the adjusting rod can be vertically adjusted along the pedal arm.

Also, the adjusting rod is fixed to the supporting plate and this supporting plate is mounted to the fixture so as to be able to adjust the position of the adjusting rod, whereby the position whereat the adjusting rod abuts upon the vehicle body side can be adjusted.

## Claims

1. An adjustment device for an automotive clutch pedal, equipped with an adjusting tool, which is provided on said pedal arm or on the vehicle body side, for regulating a final pedal step-in position so as to adjust in a direction to shorten a pedal stroke caused by a pedal arm of an automotive clutch pedal.

2. The adjustment device for an automotive clutch pedal according to Claim 1, wherein
said adjusting tool is equipped with:
an adjusting rod, the tip end of which extends on the vehicle body side; and
a fixture which is fixed to said pedal arm and which supports said adjusting rod so as to be able to freely adjust the length thereof in such a manner that on stepping in said pedal, the tip end of said adjusting rod abuts upon said vehicle body side to thereby regulate the final pedal step-in position.

3. The adjustment device for an automotive clutch pedal according to Claim 2, wherein
said fixture is equipped with:
a supporting plate for supporting and fixing said adjusting rod so as to be able to freely adjust the length thereof;
a pair of mounting pieces to which said supporting plate is mounted, and which sandwiches the front and rear portions of said pedal arm therebetween; and
fixing members which are located on the left and right sides of said pedal arm and fix so as to sandwich said pedal arm between said mounting pieces, and wherein
said adjusting rod is fixed so as to be able to vertically adjust a fixing position of said adjusting rod to said pedal arm.

4. The adjustment device for an automotive clutch pedal according to Claim 3, wherein said supporting plate is mounted to said mounting piece so as to be able to freely adjust the position of said adjusting rod.

5. The adjustment device for an automotive clutch pedal according to Claim 1, wherein
said adjusting tool is equipped with:
an adjusting rod, the tip end of which extends on the vehicle body side; and
a supporting fixed portion which supports and fixes said adjusting rod so as to be able to freely adjust the length thereof, and which is fixed to said pedal arm in such a manner that on stepping in said pedal, the tip end of said adjusting rod abuts upon said vehicle body side to thereby regulate the final pedal step-in position.

6. The adjustment device for an automotive clutch pedal according to Claim 1, wherein
said adjusting tool is equipped with:
an adjusting rod, the tip end of which opposes to said pedal arm; and
a supporting fixed portion which is fixed on said vehicle body side, and which supports said adjusting rod so as to be able to freely adjust the length thereof in such a manner that on stepping in said pedal, the tip end of said adjusting rod abuts upon said pedal arm to thereby regulate the final pedal step-in position.
